# EUROPÄISCHE PATENTSCHRIFT

(11) **EP 0 496 107 B1**
(45) Veröffentlichungstag und Bekanntmachung des Hinweises auf die Patenterteilung: **18.05.1994**
(21) Anmeldenummer: 91122161.2
(22) Anmeldetag: 23.12.1991
(51) Int. Cl.: F16B 7/04, F16B 7/18, F16B 12/30, F16B 12/40

(54) **Durch Schrauben mit einem Profilstab verbundener Tragstab**
Supporting bar fastened to a profiled bar by screwing
Barre de support fixée à une barre profilée par vissage

(30) Priorität: 07.01.1991 DE 9100099 U
(43) Veröffentlichungstag der Anmeldung: 29.07.1992
(73) Patentinhaber: Phoenix-Mecano Holding AG, 8260 Stein am Rhein (DE)
(72) Erfinder: Bahr, Frank, D-32457 Porta Westfalica (DE)
(74) Vertreter: Stracke, Alexander, Dipl.-Ing.

(56) Entgegenhaltungen:
- EP-A- 0 010 475
- DE-U- 8 529 284
- DE-U- 9 006 344
- DE-U- 9 100 099

## Beschreibung

Die vorliegende Erfindung betrifft einen durch Schrauben mit einem Profilstab verbundenen Tragstab gemäß dem Oberbegriff des Anspruchs 1.

Solcherart mit einem Tragstab verbundene Profilstäbe sind bekannt (siehe DE-U-8529284). Bei einer anderen Konstruktion wird ein Profilstab mit einem Tragstab verbunden, indem die Schraube im Tragstab derart gehalten wird, daß sich der Schraubenkopf auf einer Stützscheibe oder einem Nutstein abstützt, die oder der in der dem Profilstab zugewandten, hinterschnittenen Längsnut einliegt.

Die Schraube ist dabei in eine konzentrisch zur Mittenachse des Profilstabes angeordnete Innenkammer eingeschraubt, während eine entsprechende Querbohrung im Tragstab die Durchführung eines Werkzeuges, zum Beispiel eines Schraubendrehers ermöglicht, um die Schraube zu betätigen.

Ein Nachteil dieser Verbindungsart liegt darin, daß aufgrund der exakt zentrischen Befestigung eine nur relativ geringe Belastbarkeit möglich ist, wobei insbesondere kaum Torsionskräfte angenommen werden können, das heißt eine Verdrehsicherung zwischen dem Tragstab und dem Profilstab ist so gut wie nicht vorhanden.

Weiter ist als nachteilig anzusehen, daß die Schraube zusammen mit der Stützscheibe in jedem Fall vom offenen Ende des Tragstabes her eingeführt werden muß, wobei sich zwangsläufig Handhabungsschwierigkeiten bei der genauen Positionierung ergeben.

Besonders problematisch gestaltet sich der nachträgliche Einbau eines Profilstabes zwischen zwei bereits montierte.
Praktisch ist dazu eine komplette Demontage zumindest eines Profilstabes erforderlich, um die Schraube zusammen mit der Stützscheibe des neu zu montierenden Profilstabes vom Ende des freien Tragstabes her einzuführen.

Naturgemäß ist diese Verbindungsart umständlich herzustellen und zu handhaben, so daß ein wirtschaftlich sinnvoller Einsatz nicht möglich ist.

Der vorliegenden Erfindung liegt daher die Aufgabe zugrunde, einen Profilstab so zu gestalten, daß er belastungsfähiger mit dem Tragstab verbunden und eine einfachere und kostengünstigere Montage möglich ist.

Diese Aufgabe wird durch die im kennzeichnenden Teil des Anspruchs 1 genannten Merkmale gelöst.

Durch diese konstruktive Ausgestaltung ist zunächst einmal eine wesentlich einfachere Montage möglich, da die Bohrung zur Durchführung der Schrauben unmittelbar an Ort und Stelle in den Tragstab eingebracht und die Schrauben durch den schon positionierten Tragstab geführt und in den Profilstab eingeschraubt werden können.

Dadurch, daß nun in den Profilstab zwei Schrauben eingedreht sind, von denen mindestens eine dazu dient, den Tragstab am Profilstab zu befestigen, während dann, nach einem weiteren Gedanken der Erfindung, der zylindrische Kopf der zweiten Schraube in die zugeordnete Längsnut des Tragstabes ragt, wobei vorteilhafterweise der Durchmesser des Kopfes etwa der Breite der Längsnut entspricht, wird eine Verdrehsicherung des Tragstabes zum Profilstab erreicht.

Diese Möglichkeit der Festlegung bietet sich in besonderer Weise dort an, wo zwei Profilstäbe in gleicher Querschnittsebene des Tragstabes an diesem an benachbarten Längsseiten, also bei einem rechteckigen oder quadratischen Querschnitt des Tragstabes rechtwinklig zueinander stehend, befestigt sind.

Für den Fall, daß lediglich ein Profilstab mit dem Tragstab verbunden wird, werden zweckmäßigerweise beide Schrauben durch den Tragstab geführt, die sich in diesem mit ihrem jeweiligen Kopf in der entsprechend abgesetzten Bohrung abstützen.
Wie sich gezeigt hat, ist die statische Belastbarkeit dieser Verbindung gegenüber den bekannten Verbindungen erheblich verbessert.
Weitere vorteilhafte Ausgestaltungen der Erfindung sind Gegenstand der Unteransprüche.
Ausführungsbeispiele der Erfindung werden im folgenden anhand der beigefügten Zeichnungen beschrieben.
Es zeigen:
- Figur 1: einen Querschnitt durch einen Tragstab mit angeschlossenem Profilstab
- Figur 2: eine Vorderansicht der Profilstab-/Tragstab-Verbindung, teilweise geschnitten
- Figur 3: ein weiteres Ausführungsbeispiel der Erfindung in einer Querschnittsdarstellung des Tragstabes
- Figur 4: das in der Figur 3 gezeigte Ausführungsbeispiel einer teilweise geschnittenen Vorderansicht.

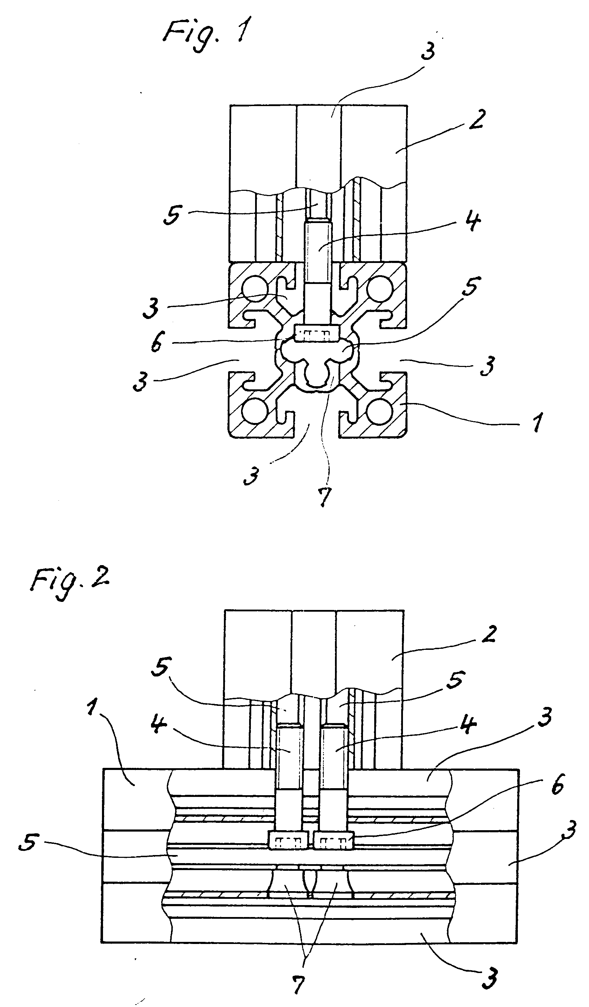

In den Figuren ist ein Tragstab 1 dargestellt, an dem bei dem in den Figuren 1 und 2 gezeigten Ausführungsbeispiel ein Profilstab 2 durch Schrauben angeschraubt ist. Dabei liegt der Profilstab 2 stirnseitig an einer Längsseite des Tragstabes 1 an.
Der Tragstab 1 und der Profilstab 2 sind im Querschnitt gleich gestaltet, wobei ihre Querschnittsfläche quadratisch ist und die Längsseiten mit jeweils einer mittig verlaufenden sich in Längsrichtung erstreckenden hinterschnittenen Längsnut 3 versehen sind.

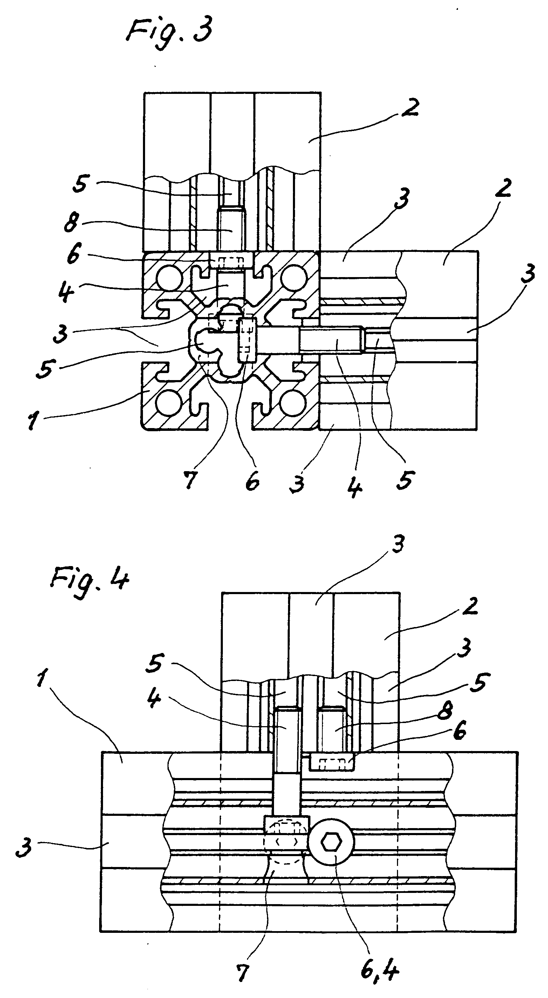

Im Innern des Profilstabes 2 und des Tragstabes 1 sind konzentrisch verteilt, vier Innenkammern 5 vorgesehen, die sich parallel zu den Längsnuten 3 erstrecken. Die gemeinsame Querachse zweier dieser Innenkammern 5 verläuft deckungsgleich mit der Längsachse des Tragstabes 1, so daß ihre Öffnungen mittengenau auf der zugeordneten Längsnut des Tragstabes 1 liegen.
In Verlängerung der Längsachsen der Innenkammern 5 des Profilstabes 2 sind im Tragstab 1 Bohrungen 7 vorgesehen, durch die die Schrauben geführt sind.
Diese Bohrungen 7 sind abgesetzt, das heißt, ihre dem Profilstab 2 abgewandte Einführöffnung ist in ihrem Durchmesser größer als die gegenüberliegende Austrittsöffnung, wobei der Durchmesser der Einführöffnung geringfügig größer ist als der Schaftdurchmesser der Schraube 4. Dadurch kann sich der Schraubenkopf 6 im Innern des Tragstabes abstützen. Zweckmäßigerweise ist der Absatz in der Bohrung 7 in dem dem Profilstab zugewandten Bereich vorgesehen.
Mit geeigneten Hilfsmitteln, wie Bohrschablonen o.dgl. ist ein exaktes Bohren der Bohrungen 7 dann möglich, wenn der Profilstab 2 positionionsgenau am Tragstab anliegt. Weiter ist durch Einsatz von zwei außermittig angreifenden Schrauben 4 eine erhebliche verbesserte Belastungsfähigkeit, insbesondere hinsichtlich der Aufnahme von Torsionskräften gegeben.
Bei dem in den Figuren 3 und 4 dargestellten Ausführungsbeispiel sind an zwei benachbarten Längsseiten des Tragstabes 1, also rechtwinkelig zueinander, Profilstäbe 2 angebracht. Dabei liegen diese in einer gemeinsamen Querschnittsebene des Tragstabes 1.
Um auch bei dieser Konstuktion eine Verdrehsicherung zu erreichen, ist pro Profilstab 2 lediglich eine sich im Tragstab 1 abstützende Schraube 4 vorgesehen, während eine andere, in die entsprechende Innenkammer 5 des Profilstabes 2 eingeschraubte Schraube 8, sich an der Stirnseite des Profilstabes 2 abstützt und dabei mit ihrem zylindrischen Kopf 6 in die zugeordnete Längsnut 3 des Tragstabes 1 ragt. Sinnvollerweise ist der Schraubenkopf 6 dieser Schraube 8 in seinem Durchmesser etwa so groß wie die Breite der Längsnut 3.
Die jeweils zu der sich im Tragstab 1 abstützenden Schraube 4 fluchtende, in den anderen Profilstab 2 eingeschraubte Schraube 8, ist diejenige, die sich an der Stirnseite des Profilstabes abstützt, so daß ohne Probleme die Schraube 4 eingeschraubt werden kann, die jeweils den Profilstab 2 mit dem Tragstab verbindet.

## Patentansprüche

1. Durch mindestens eine Schraube mit einem Profilstab verbundener Tragstab, an dessen einer Längsseite der Profilstab mit einer Stirnseite anliegt, wobei der Tragstab auf seinen Längsseiten mit mittig verlaufenden Längsnuten versehen ist und wobei mindestens eine Schraube quer durch den Tragstab geführt ist, sich in diesem mit ihrem Kopf abstützt und in eine sich in Längsachsrichtung erstreckende Innenkammer des Profilstabes eingeschraubt ist, dadurch gekennzeichnet, daß im Profilstab (2) zwei parallel und mit Abstand zueinander verlaufende Innenkammern (5) vorgesehen sind, deren gemeinsame Querachse deckungsgleich mit der Längsachse des Tragstabes (1) verläuft, und daß in jede Innenkammer (5) eine Schraube (4,8) eingedreht ist, von denen mindestens eine quer durch den Tragstab geführt ist.

2. Tragstab nach Anspruch 1, dadurch gekennzeichnet, daß jede der in die Innenkammern (5) eingedrehten Schrauben (4) durch den Tragstab (1) geführt ist.

3. Tragstab nach Anspruch 1 bei dem an zwei benachbarten Längsseiten jeweils ein Profilstab angeschlossen ist, dadurch gekennzeichnet, daß jeder Profilstab (2) mit einer Schraube (4) am Tragstab (1) festgelegt ist, während die andere Schraube (8) mit ihrem zylindrischen Kopf (6) in die zugeordnete Längsnut (3) des Tragstabes ragt.

4. Tragstab nach Anspruch 1 oder 3, dadurch gekennzeichnet, daß der Kopfdurchmesser der Schrauben (4,8) etwa der Breite der Längsnut (3) entspricht.

5. Tragstab nach Anspruch 3, dadurch gekennzeichnet, daß die mit ihrem Kopf in die Längsnut (3) ragende Schraube (8) mit der sich im Tragstab (1) abstützenden, in den anderen Profilstab (2) eingedrehten Schraube (4) fluchtet.

6. Tragstab nach Anspruch 1, dadurch gekennzeichnet, daß die durch den Tragstab geführte Bohrung (7) abgesetzt ist, wobei der Absatz in dem dem Profilstab (2) zugewandten Bereich vorgesehen ist.

## Claims

1. A supporting bar which is connected by at least one screw to a profile bar, against one longitudinal side of which supporting bar rests a front side of the profile bar, wherein the longitudinal sides of the supporting bar are provided with centrally extending longitudinal grooves and wherein at least one screw is guided transversely through the supporting bar, is supported in it by virtue of its head, and is screwed into a longitudinally extending inner chamber of the profile bar, characterised in that provided in the profile bar (2) are two parallel and mutually spaced apart inner chambers (5), the common transverse axis of which is congruent with the longitudinal axis of the supporting bar (1), and in that a screw (4, 8) is screwed into each inner chamber (5), at least one of these screws being guided transversely through the supporting bar.

2. A supporting bar according to Claim 1, characterised in that each of the screws (4) which is screwed into the inner chambers (5) is guided through the supporting bar (1).

3. A supporting bar according to Claim 1, wherein a profile bar is attached to each of two adjacent longitudinal sides, characterised in that each profile bar (2) is secured to the supporting bar (1) by means of a screw (4), whilst the other screw (8) projects by way of its cylindrical head (6) into the associated longitudinal groove (3) of the supporting bar.

4. A supporting bar according to Claim 1 or Claim 3, characterised in that the diameter of the head of the screws (4, 8) is approximately equal to the width of the longitudinal groove (3).

5. A supporting bar according to Claim 3, characterised in that the screw (8) whose head projects into the longitudinal groove (3) is in alignment with the screw (4) which is supported in the supporting bar (1) and which is screwed into the other profile bar (2).

6. A supporting bar according to Claim 1, characterised in that the bore (7) which is guided through the supporting bar is offset, wherein the offset portion is provided in the region which faces the profile bar (2).

## Revendications

1. Barre de support reliée à une barre profilée, au moyen d'au moins une vis, et sur laquelle une face longitudinale de la barre profilée appuie avec une face frontale, la barre de support étant pourvue sur ses faces longitudinales de rainures longitudinales, disposées au centre, au moins une vis étant guidée transversalement a travers la barre de support, prenant appui dans celle-ci avec sa tête et étant vissée dans une chambre intérieure, s'étendant dans la direction longitudinale, de la barre profilée, **caractérisée en ce que** deux chambres intérieures (5) s'étendant parallèlement et à distance l'une de l'autre dans la barre profilée (2) sont prévues, chambres dont l'axe transversal commun coïncide avec l'axe longitudinal de la barre de support (1), et en ce que dans chaque chambre intérieure (5) est vissée une vis (4, 8), dont au moins l'une est guidée transversalement à travers la barre de support.

2. Barre de support selon la revendication 1, caractérisée en ce que chacune des vis (4) vissées dans les chambres intérieures (5) est guidée à travers la barre support (1).

3. Barre de support selon la revendication 1, pour laquelle une barre profilée est raccordée à chacune de deux faces longitudinales voisines, caractérisée en ce que chaque barre profilée (2) est fixée sur la barre support (1) à l'aide d'une vis (4), tandis que l'autre vis (8) pénètre, par sa tête cylindrique (6), dans la rainure longitudinale (3) associée de la barre de support.

4. Barre de support selon la revendication 1 ou 3, caractérisée en ce que le diamètre de tête des vis (4, 6) correspond à peu près à la largeur de la rainure longitudinale (3).

5. Barre de support selon la revendication 3, caractérisée en ce que la vis (8) pénétrant avec sa tête dans la rainure longitudinale (3) est alignée par rapport à la vis (4), prenant appui dans la barre de support (1), vissée dans l'autre barre profilée (2).

6. Barre de support selon la revendication 1, caractérisée en ce que le perçage (7) ménagé à travers la barre de support est muni d'un décrochement, le décrochement étant prévu dans la zone tournée vers la barre profilée (2).
